# EUROPEAN PATENT APPLICATION

(11) **EP 1 760 654 A1**
(43) Date of publication of application: **07.03.2007**
(21) Application number: 06119444.5
(22) Date of filing: 24.08.2006
(51) Int. Cl.: G06Q 30/00

(54) **Vehicle network advertising system**

(30) Priority: 26.08.2005 US 213129
(71) Applicant: Palo Alto Research Center Incorporated, Palo Alto, California 94304 (US)
(72) Inventor: Huang, Qingfeng, San Jose, CA 95129 (US); Green, Daniel H., Sunnyvale, CA 94087 (US); Liu, Juan, Milpitas, CA 95035 (US); Calabria, Hermann, Mountain View, CA 94040 (US)
(74) Representative: Grünecker, Kinkeldey, Stockmair & Schwanhäusser Anwaltssozietät

(57) **Abstract**

AN ARCHITECTURE FOR CONTEXT-AWARE ADVERTISEMENT AND DELIVERY AMONG MOBILE COMMUNICATION DEVICES OVER A COMMUNICATION NETWORK, IN WHICH THE ARCHITECTURE IS STORED AND EXECUTED AS AN APPLICATION FOR USE BY NETWORK DEVICES. THE ARCHITECTURE INCLUDES A NAVIGATION MODULE, WHICH PROVIDES MAP DATA VEHICLES ON THE NETWORK AND A CONTEXT RECOGNITION MODULE, WHICH INTERPRETS DATA PROVIDED BY SENSORS WITHIN THE VEHICLE. ADVERTISING DATA IS RECEIVED BY A DATA RECEPTION MODULE. A CONFIGURATION MODULE DETERMINES PRESENTATION SLOT AVAILABILITY. THE VALUE AND CONTENT OF THE AUTHENTICATED ADVERTISEMENT IS VERIFIED BY THE ADVERTISEMENT MANAGEMENT MODULE; SELECTED ADVERTISEMENTS ARE PRESENTED TO THE VEHICLE USER.

## Description

### BACKGROUND

This disclosure relates generally to the advertisement of goods and services to mobile units and more specifically to a digital context-aware advertisement delivery and presentation architecture.

Traditionally, roadside billboards have acted as a means for advertising goods and services to travelers, including drivers, walkers, and bikers. This advertising outlet has been frequently used by restaurants, automobile dealers, convenience stores, hotels, hospitals, and other service industries and manufacturers to provide information on services or goods available, as well as the location of the advertiser. However, billboard space is limited due to local restrictions and environmental concerns. An alternative to billboard advertising is vehicular network advertising which has become feasible with the development of more sophisticated wireless communication systems and the use of numerous sensing and control capabilities within mobile units. While vehicle network advertising would be a useful tool for advertisers to increase sales, customer affinity, and profits, there are problems associated with effectively using the ubiquitous sensing, computation and wireless communication infrastructure soon to be in place for such networks for issuing, deliver and presenting advertisements, particularly coupons, to customers in a user-friendly manner.

### BRIEF SUMMARY

The disclosed embodiments provide examples of improved solutions to the problems noted in the above Background discussion and the art cited therein. There is shown in these examples an improved architecture for context-aware advertisement and delivery among mobile communication devices over a communication network, in which the architecture is stored and executed as an application for use by network devices. The architecture includes a navigation module, which provides map data vehicles on the network and a context recognition module, which interprets data provided by sensors within the vehicle. Advertising data is received by a data reception module, and a configuration module determines presentation slot availability. The value and content of the advertisement are verified by the advertisement management module; selected advertisements are presented to the vehicle user.
In a further embodiment said advertisement memory module further stores the record of said authenticated advertisement to a database.
In a further embodiment said record is in the form of a signature/content pair.
In a further embodiment said record contains at least one member selected from the group consisting of time of receipt of said advertisement data, advertisement type, coupon value, advertisement value to an advertising service, identification of the source of said advertisement, target area for presentation of said advertisement, and valid advertisement presentation period.
In a further embodiment said state data includes at least one member selected from the group consisting of tire pressure, fuel level, number of occupants of said vehicle, and velocity.
In a further embodiment said configuration module further contains a user interface to enable said vehicle user to input said presentation slots and preferences.
In a further embodiment said advertisement management module calculates the value of presenting a selected at least one authenticated advertisement to said vehicle user.
In a further embodiment said advertisement management module determines the timing for presentation of each said authenticated advertisement to said vehicle user.
In a further embodiment said communication network further includes a server supporting the communication network, wherein reside software modules for advertisement management.
In a further embodiment the architecture for context-aware advertisement and delivery among mobile communication devices further comprises a decryption and authentication module for decrypting said advertising data and authenticating the signature of said advertising data, wherein said signature includes identification of the source of said advertising data.
In a further embodiment said software modules comprise:
advertisement management module for issuing and delivering advertisements or coupons over the communication network;
advertisement billing module for monitoring the response of vehicle users to advertisements or coupons propagated over the communication network;
advertisement admission module for accepting at least one coupon or at least one advertisement from at least one advertiser, wherein said at least one coupon or said at least one advertisement includes a specified pricing structure; and
advertisement distribution module for propagating said at least one coupon or said at least one advertisement over the communication network.
In a further embodiment said advertisement admission module further performs determining the initial scope over which each said accepted coupon or each said accepted advertisement will be disseminated.
In a further embodiment said advertisement admission module further performs authenticating said at least one coupon or said at least one advertisement prior to propagation over the communication network.
In a further embodiment advertisement distribution module propagates said at least one coupon or said at least one advertisement in accordance with specified scope parameters.
In a further embodiment said scope parameters include geographical area or delivery time.
In a further embodiment said advertisement billing module further includes computing an advertising cost for each said advertiser.
In a further embodiment said advertisement billing module further includes instructing removal of at least one selected coupon or at least one selected advertisement from propagation over the communication network.
In a further embodiment the architecture for context-aware advertisement and delivery among mobile communication devices further comprises an advertising service supporting the communication network.
In a further embodiment said advertising service comprises:
means for receiving at least one advertising request from an advertiser, wherein said advertising request includes at least one member selected from the group comprising text material, image material, coupons, and discounts;
means for providing certification of said at least one advertising request, wherein certification includes a signature of the contents of said advertising request; and
means for propagating at least one certified advertising request over the communication network.
In a further embodiment the architecture for context-aware advertisement and delivery among mobile communication devices further comprises means for receiving at least one bid from an advertiser for each said advertising request submitted, wherein said bid includes at least one presentation slot specification and a proposed amount of payment for presentation.
In a further embodiment the architecture for context-aware advertisement and delivery among mobile communication devices further comprises means for computing ranking information from said at least one bid, wherein said ranking reflects the financial value of propagation of said at least on advertising request to said advertising service.

In another embodiment there is provided an architecture for context-aware advertisement and delivery among mobile communication devices over a communication network, in which the architecture is stored and executed as an application for use by network devices. The architecture includes capability for providing map data for vehicles on the network, as well as interpreting data provided by sensors within the vehicle. As advertising data is received, it is entered into memory. Presentation slot availability is determined, with a presentation slot corresponding to a particular circumstance for which advertisements may be presented to a vehicle user. The architecture also includes capability for verifying the value and content of the advertisement before presenting it to a vehicle user.

In yet another embodiment there is disclosed a method for context-aware advertisement and delivery among mobile communication devices over a communication network, with the method stored and executed as an application for use by network devices. The method includes providing map data for vehicles on the network and interpreting localization data, map data, or device state data provided by sensors within the vehicle, as needed. When advertising data is received, it is entered into memory. Presentation slot availability is determined, with presentation slots corresponding to particular circumstances for which advertisements may be presented to a vehicle user. The method verifies the value and content of the advertisement before presenting it to the vehicle user.

In yet another embodiment, there is disclosed a computer-readable storage medium having computer readable program code embodied in the medium causing the computer to perform method steps for context-aware advertisement and delivery among mobile communication devices over a communication network. The method includes providing map data for vehicles on the network and interpreting localization data, map data, or device state data provided by sensors within the vehicle, as needed. As advertising data is received, it is entered into memory. Presentation slot availability is determined, with presentation slots corresponding to particular circumstances for which advertisements may be presented to a vehicle user. The method verifies the value and content of the advertisement before presenting it to the vehicle user.

### BRIEF DESCRIPTION OF THE DRAWINGS

The foregoing and other features of the embodiments described herein will be apparent and easily understood from a further reading of the specification, claims and by reference to the accompanying drawings in which:

FIG. 1 illustrates an example embodiment of the vehicle advertising network;

FIG. 2 illustrates one possible communication mode between an advertiser and a vehicle on the vehicle advertising network;

FIG. 3 illustrates another possible communication mode between an advertiser and a vehicle on the vehicle advertising network;

FIG. 4 illustrates an embodiment of the capabilities of vehicles participating in the vehicle advertising network;

FIG. 5 illustrates an embodiment of the computing architecture for vehicles participating in the vehicle advertising network;

FIG. 6 illustrates the operation of the computing architecture presented in Figure 5;

FIG. 7 illustrates one embodiment of a communication mode among vehicles on the vehicle advertising network; and

FIG. 8 illustrates an embodiment of the computing architecture for vehicles participating in the vehicle advertising network in an inter-vehicle communication mode.

### DETAILED DESCRIPTION

The vehicle advertising network described herein provides a digital context-aware advertisement delivery and presentation framework which provides an effective strategy for product advertisement and business intelligence as vehicular communication devices and sensors are becoming more pervasive. The network includes an ad hoc wireless network system to propagate advertising for market-controlled presentation in vehicles, a system to manage advertising and coupon presentation in vehicles, and a reverse bidding framework for trip services. While for convenience and brevity in the following discussion a vehicle is described as an automobile moving on a roadway, it is noted that vehicle as used herein includes any mobile entity with a computing device having wireless communication capability, such as a boat, an airplane, or a user carrying a cell phone, as well as an automobile. All are fully contemplated by the specification and scope of the claims herein.

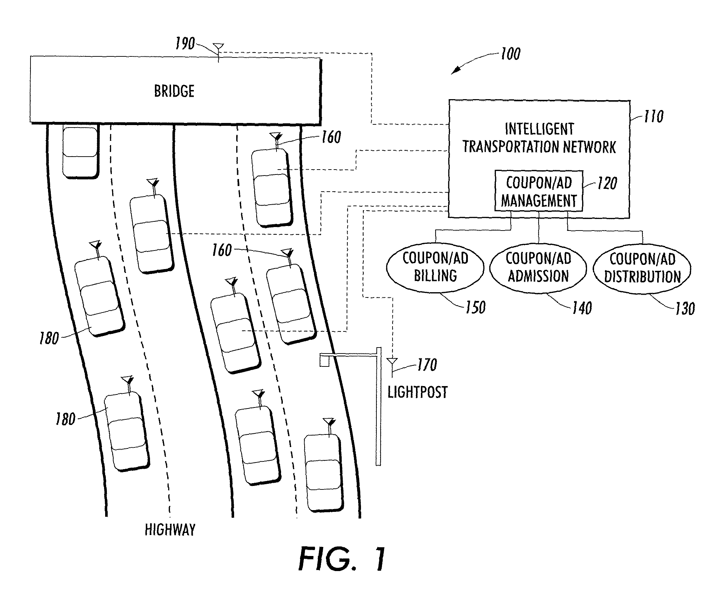

In the following description numerous specific details are set forth in order to provide a thorough understanding of the system and method. It would be apparent, however, to one skilled in the art to practice the system and method without such specific details. In other instances, specific implementation details have not been shown in detail in order not to unnecessarily obscure the present invention. Referring to Figure 1, the schematic diagram illustrates an example embodiment of the system for vehicle network advertising. Intelligent transportation network 110 may provide various capabilities, such as route information and navigation services, weather information, traffic information, road condition information, neighboring vehicle location, velocity and acceleration information, traffic light signal information, traffic sign information, retail/service location information, and AMBER alert information, among others, as well as advertising management. The server supporting intelligent transportation network 110 may be a general-purpose computer upon which reside the software modules capable of managing system operation. It may also be a system designed specifically for inter vehicle communication into which software modules for coupon/advertisement management have been incorporated.

Within intelligent transportation network 110 resides coupon and advertisement management module 120, which includes coupon/advertisement billing module 150, coupon/advertisement admission module 140, and coupon/advertisement distribution module 130. Coupon/advertisement admission module 140 may perform several functions, including accepting coupons/ads from advertisers with a chosen pricing scheme, determining the initial scope over which each coupon/ad is disseminated, and, optionally, stamping and authenticating the coupons/ads for propagation in the network. Coupon/ad distribution module 130 propagates the coupons/ads in the network according to prescribed scope parameters, such as area and time. Billing module 150 monitors the response of vehicle users to specific coupons and may use that information to compute the cost to the respective advertisers, and may use the information for adjustment of the presentation strategy to improve effectiveness of advertisement presentation. The billing module may also contain a function to trigger removal of propagation of a coupon/ad in the network, for example, upon request by the advertiser. Network 110 transmits information to participating vehicles 180 either directly or through transmission units 170 and 190 located along a roadway.

While the architecture described in Fig 1 is independent of the underlying wireless transmission protocols, existing wireless transmission protocols such as DSRC (Dedicated Short Range Communication protocol), IEEE 802.11 (WiFi) may be used. There are no specific transmission protocols required for a vehicle to participate in the network except for the necessity of having a wireless signal reception interface for the chosen signal band and protocol. For intermediary transmission units such as units 170 and 190, both reception and re-transmission capabilities are needed. The intermediary transmission units may receive signals from satellites or cellular towers, using a protocol and wireless media that are different from the one it uses to transmit to vehicles, as well as the protocol it uses to transmit among vehicles. Generally, network transmissions are based on a geographical broadcast, usually targeting vehicles in a specific area. The user does not need to access the central system before information is transmitted.

Various computing environments may incorporate capabilities for supporting an intelligent transportation network. The following discussion is intended to provide a brief, general description of suitable computing environments in which the method and system may be implemented. Although not required, the method and system will be described in the general context of computer-executable instructions, such as program modules, being executed by a single computer. Generally, program modules include routines, programs, objects, components, data structures, etc., that perform particular tasks or implement particular abstract data types. Moreover, those skilled in the art will appreciate that the method and system may be practiced with other computer system configurations, including hand-held devices, multi-processor systems, microprocessor-based or programmable consumer electronics, networked PCs, minicomputers, mainframe computers, and the like.

The method and system may also be practiced in distributed computing environments where tasks are performed by remote processing devices that are linked through a communication network. In a distributed computing environment, program modules may be located in both local and remote memory storage devices.

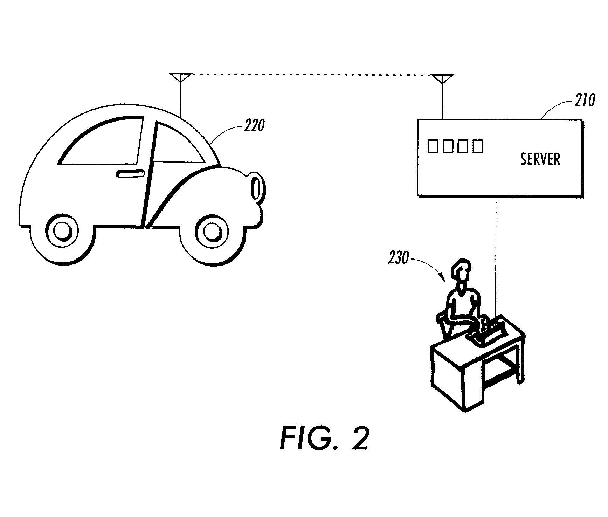

Turning now to Figure 2, there is illustrated one potential communication mode through the network. Here a service provider or advertiser 230 communicates with the network through server 210. Network advertising management modules residing within the server process the provider/advertiser information, identify vehicle traffic that may be interested in the provider/advertiser information, and transmit the information to vehicle 220 via any of the transmission modes described hereinabove.

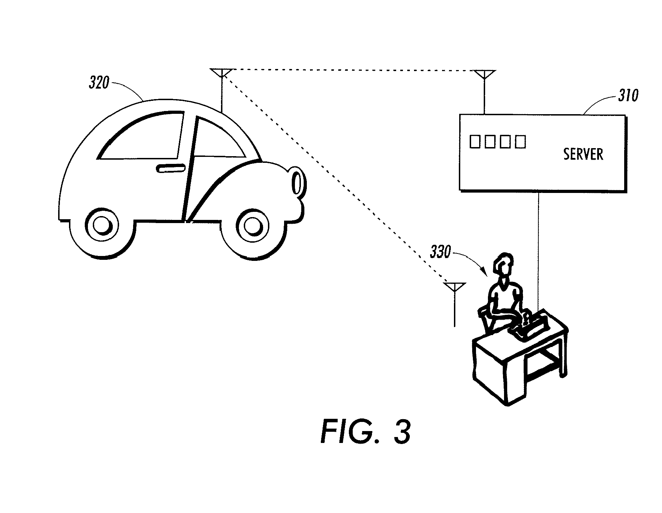

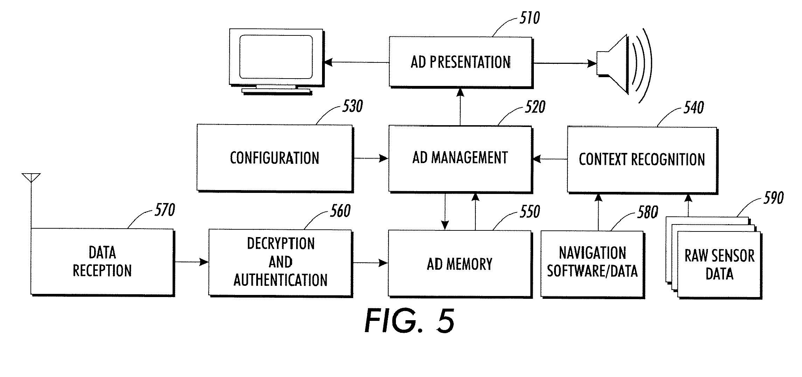

An alternative communication mode is illustrated in Figure 3, in which the service provided/advertiser may communicate with the server, as described above with respect to Figure 2, or directly with vehicles. The information is in general sent to vehicles in one or multiple chosen geographical areas. However, the recipients may be further differentiated by other factors such as direction of travel (for example, vehicles approaching a service provider as opposed to traveling away from a service provider). To avoid a potential spam problem, only information from authenticated advertisers may be propagated in the network. Each advertiser allowed to directly inject ads into the network is provided with an individualized unique digital key for the purpose of authentication, as discussed more fully hereinbelow with respect to Figure 5.

Only messages containing legitimate signatures are forwarded in the system. The software on each vehicle contains an authentication component for admission control. The admission control module also maintains a record of the admitted information. This record, similar to an effect and transaction related record (for example, a vehicle user may notice a particular ad or coupon, drive to the specific store, and cash the coupon), is transmitted to the central server at the appropriate time for billing purposes. In other words, a subscription is required to obtain transmission rights for direct vehicle communication.

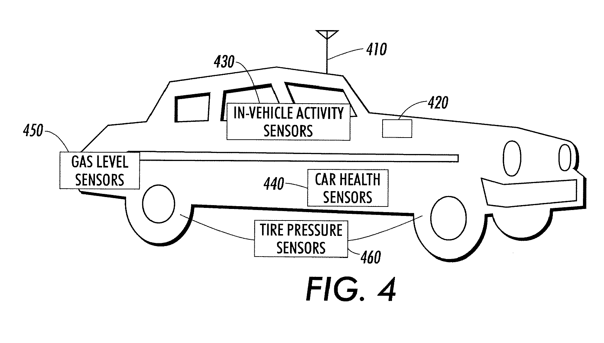

Turning now to Figure 4, in one embodiment a vehicle capable of participating in the advertising network may include such features as gas level sensors, in-vehicle activity sensors, car health sensors, and tire pressure sensors, among others. These sensors form important support for the ad/coupon presentation process. Information from these sensors is used to decide when and what coupon/ad should be presented. In other words, the information provides useful context to enable context-awareness in coupon/ad presentation. The vehicle also includes wireless communication capability, which may take the form of IEEE 802.11 or the DSRC protocol. These capabilities are controlled through an onboard management computer system. This system may take the form of a general computer with input/output for wireless cards and sensors. The computer contains at least a central processing unit, some memory, storage, and network advertising operating system and software.

Figure 5 illustrates the software residing in the onboard computer in an advertising network vehicle. Raw sensor data 590 is assembled and provided, with navigation software and data from module 580, to context recognition module 540. Navigation software and data module 580 in general uses GPS data for localization, and may use estimation for occasional localization when GPS signals are not available. The software may use map data on the hard drive or portable media such as a CD or a flash memory card. Navigation software may be provided by the auto manufacturer or any other third party. Context recognition module 540 interprets the location (and area information, passenger travel destination information, etc.) data from navigation software and data module 580 and vehicle state information, such as gas level, tire pressure, number of occupant, speed, to provide a few examples, from raw sensor data 590, and forms a working context for the ad management software residing in ad management module 520. One example of a working context is "fuel is low (from a sensor in the fuel gage), and a service station is in the vicinity (from a navigation location map)". A working context is a key trigger component for coupon presentation.

Data reception module 570 receives advertising data and may do some preliminary error checking (e.g. for transmission error). Decryption and authentication module 560 decrypts data passed from data reception module 570 and checks the signature of the data using authentication mechanisms. One example authentication mechanism would be determining whether the signature appears among a set of legitimate numeric sequence distributed by the server. The decrypted data including the signature are passed to ad memory module 550. Ad memory module 550 includes capability for entering the new ad/coupon intro memory and storing the record (for example in the form of a signature/content pair) to a database on the hard drive. The record may also contain the time the data is received and may utilize finer grain content information, such as parsing the content into ad types, coupon value, ad value to the advertising service (amount the advertiser will pay for an effective ad presentation), advertiser name, target area, and valid presentation period, as a few examples. The database table may be managed according to ad types, validity time, or any other known approach. Ad memory module 550 receives a "valid ad" request from ad management module 520 and transmits the set of matching valid ads back to ad management module 520 which checks ad value and content of set of ads and calculates the effective value of presenting each ad to the vehicle user at a particular moment. It then selects one or a few of the best-valued advertisements and presents them to the vehicle user through ad presentation module 510.

As an illustrative example, two coupons may be received from service stations A and B respectively. Station A offers to pay $.01 for each "drive-to after seeing coupon" event and station B offers to pay $.02 for each "drive-to after seeing coupon". Ad management module 520 may choose to present B's coupon at a particular moment. Ad management module 520 may choose to present A's coupon rather than B's coupon if the following is true: B's station is relatively far away, and the driver's preference of A is known from history, especially if the estimated likelihood of the driver ignoring B's coupon is greater than fifty percent. Configuration module 530 determines what presentation slots are available to be used and passes this information to ad management module 520. The configuration module 530 may contain a user interface to enable users to input presentation slots and preferences. Ad management module 520 transmits the approved ads to ad presentation module 510, which directs the ad to audio or video capabilities present in the vehicle.

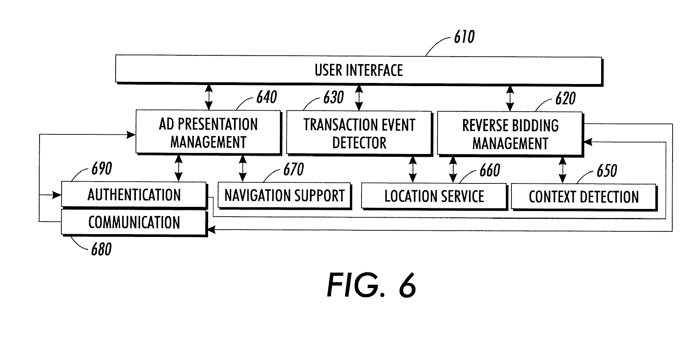

Turning now to Figure 6, the architecture of the software onboard the vehicle is illustrated. Here, user interface 610 communicates directly with reverse bidding management module 620, transaction event detector 630, and ad presentation management module 640. Reverse bidding management module 620 enables retailers and service providers the opportunity of doing more informed targeting of potential customers as well as enabling them to perform inventory management and sales-pricing in real or near-real time. For example, a restaurant manager could be provided with the number and arrival time of customers prior to arrival; travelers would have opportunities to plan their route according to available services and service providers' bids on plausible and competing route plans, to obtain more efficient services. Ad presentation management module 640 permits better advertising targeting and more effective use of ad time for advertisers, while travelers receive more relevant ads and avoid advertising overload.

Transaction event detector 630 receives vehicle location information from location service module 660, which determines location based on GPS data. Location change information may form a basis for detecting a "drive-to" event. Furthermore, a "click" on the items presented on the user interface may form a "click-though" event detected by transaction event detector 630. Detected transaction events, such as a "drive-to" and "click-through" are used later for billing purposes. Context detection module 650 identifies additional information which would be useful for the purposes of targeting advertising. For example, it would determine if a child is present in the vehicle, the number of people in the vehicle, whether the trip is for leisure or business, whether the fuel level is low, the temperature is high, the tire pressure is low, or whether a meal break timing is approaching, etc. This information is then provided to reverse bidding management module 620, which has also received vehicle location information from location service module 660.

Navigation support module 670 assists the driver in navigating the vehicle to specific locations and provides trip information and general area information to ad presentation module 640. Navigation support module 670 includes navigation map and navigation plan (via input from driver.) capability. The navigation maps may include business/service information at each location. Location service module 660 provides vehicle location information to transaction event detector module 630 and reverse bidding management module 620. While for the purposes of discussion modules 660 and 670 are illustrated as being separate modules, their functionality could be combined into a single navigation and location module.

Authentication module 690 checks the signature of the advertisement/coupon data using authentication mechanisms. Any known mechanism for authentication may be employed, for example, checking whether the signature appears among a set of legitimate numeric sequence (provided by the central server). The authenticated ads are passed to ad presentation module 640. Communication module 680 receives ad data and passes it to authentication module 690. In scenarios where no authentication is required, it may pass the received data directly to 640. Additionally authentication module 690 provides authenticated data to reverse bidding management module 620 for reverse bidding management. The reverse bidding management functions include sending bid solicitations to service providers, selecting and aggregating bids along alternate trip routes, seeking additional input from the vehicle user, finalizing a trip plan, sending the plan to the navigation system, communicating the route decision to service providers, monitoring the progress on the route and carrying out alert and reminder functions.

Reverse bidding module 620 may send bid solicitations to communication module 680, which then sends the solicitations out to service providers and provides the received bids, deals, or advertisements and the identification of the bidder to reverse bidding management module 620 for selection, aggregation and presentation to the user through user interface 610. Operation of reverse bidding management module 620 is further described in Attorney Docket Number 20041782-US-NP, U.S. Application Serial No. XX/XXX,XXX, filed August 26, 2005, titled "Reverse Bidding for Trip Services", incorporated by reference hereinabove

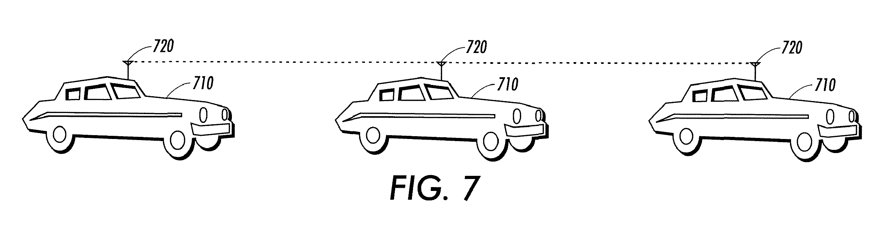

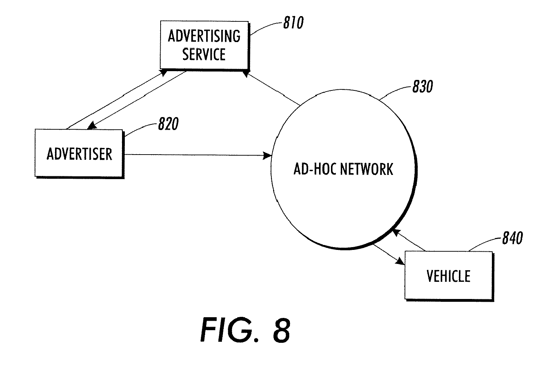

Turning now to Figure 7, there is illustrated another potential communication mode through the network. Here communication is achieved among vehicles 710 rather than through a central network via communication capabilities 720 over an ad hoc network. In this mode, vehicles receive messages directly from advertisers or from an advertising service, as described more fully with reference to Figure 8 below.

As illustrated in Figure 8, the schematic diagram illustrates an example embodiment of the system for propagating advertisements for market-controlled presentation in an ad hoc advertising network. Before an advertiser can launch an advertisement into the propagation network 830, the advertiser 820 must contact an advertising service 810 and obtain authorization to propagate the advertisement. This is described more fully in copending application Attorney Docket Number 20041783-US-NP, U.S. Application Serial No. XX/XXX,XXX, titled "System for Propagating Advertisements for Market Controlled Presentation". The advertisement presented to the advertising system by the advertiser 820 may be in the form of text or image, audio or video, and could include special offers, such as coupons or discounts. The advertiser also may present a bid to the system. The details of the bid may depend on the economic mechanism that is used, but would usually specify a 'presentation slot', and some indication of what the advertiser will pay for a successful advertisement presentation. For example, an advertiser might bid on the "low gas warning" presentation slot, bidding $.50, indicating that it will pay one dollar when a driver responds to the ad by driving to the gas station. The text of the advertisement may be "Unleaded regular gas $1.80, after a $.20/gallon discount to the recipient if this message, use exit 25."

When advertising service 810 authorizes the advertisement, it may also include ranking information that is computed from the bid. So, in the case of the gasoline example, the ranking information may be the bid itself, in this case $.50. This corresponds to a simple auction, where slots are awarded to the advertisers that are willing to pay the most per response. More complex auctions may rank bidders according to an estimate of the revenue, that is, the product of the probability of response with the amount bid. In such an auction, the advertiser would compute this estimate and include it in the certification record.

Propagation of the advertisement through network 830 is governed by targeting information that is supplied by the advertiser, and by the geography and traffic loads that the advertisement encounters as it is propagated. For example, in the case of the gasoline advertisement, the advertiser may wish to target only the southbound lanes of a nearby highway, and northwards for five miles or until 250 vehicles are reached. Vehicle condition and environmental information are used to govern the presentation of the advertisement and advertisers can be charged by verified successful presentation. If driver 840 responds to an advertisement by either selecting the advertisement to obtain more information or driving to the place of business described in the advertisement, then a response record is generated and propagated back to advertising service 810. When advertising service 810 receives a response record, it allows the advertising service to charge for the advertisements. Together, the authorization and the response record allow the vehicle to implement market-based presentation slot advertising without an online connection.

While the present discussion has been illustrated and described with reference to specific embodiments, further modification and improvements will occur to those skilled in the art. For example, the system may provide the users counter-offer capabilities. Assuming a user was presented a gas coupon bearing a 5% discount, the user could query other service stations in the area to determine if the same discount or a better discount is available from a competitor's service station. Additionally, "code" as used herein, or "program" as used herein, is any plurality of binary values or any executable, interpreted or compiled code which can be used by a computer or execution device to perform a task. This code or program can be written in any one of several known computer languages. A "computer," as used herein, can mean any device which stores, processes, routes, manipulates, or performs like operation on data. It is to be understood, therefore, that this disclosure is not limited to the particular forms illustrated and that it is intended in the appended claims to embrace all alternatives, modifications, and variations which do not depart from the spirit and scope of the embodiments described herein.

## Claims

1. An architecture for context-aware advertisement and delivery among mobile communication devices over a communication network, the architecture stored and executed as an application for use by network devices, the architecture comprising:
navigation module for providing map data for at least one vehicle on the network;
context recognition module for interpreting at least one member selected from the group consisting of localization data, map data, and device state data provided by sensors within said vehicle;
data reception module for receiving advertising data;
advertisement memory module for entering at least one advertisement into memory;
configuration module for determining presentation slot availability, wherein said presentation slot consists of a particular circumstance for which advertisements may be presented to a vehicle user;
advertisement management module for verifying the value and content of said at least one advertisement; and
advertisement presentation module for presenting said at least one advertisement to said vehicle user.

2. The architecture for context-aware advertisement and delivery among mobile communication devices according to claim 1, wherein said navigation module further provides localization data

3. The architecture for context-aware advertisement and delivery among mobile communication devices according to claim 2, wherein said localization data and said map data include at least one member selected from the group consisting of destination information global positioning data, navigation map, navigation plan, and at least one list of services available in an area appearing on said navigation plan.

4. The architecture for context-aware advertisement and delivery among mobile communication devices according to claim 1, wherein said navigation module capability is provided by a manufacturer of said vehicle.

5. The architecture for context-aware advertisement and delivery among mobile communication devices according to claim 1, wherein said map data may be resident within said navigation module or contained on computer readable media.

6. The architecture for context-aware advertisement and delivery among mobile communication devices according to claim 1, wherein said data reception module further performs preliminary error checking on said advertising data.

7. An architecture for context-aware advertisement and delivery among mobile communication devices over a communication network, the architecture stored and executed as an application for use by network devices, the architecture comprising:
means for providing map data for at least one vehicle on the network;
means for interpreting at least one member selected from the group consisting of localization data, map data, and device state data provided by sensors within said vehicle;
means for receiving advertising data;
means for entering at least one advertisement into memory;
means for determining presentation slot availability, wherein said presentation slot consists of a particular circumstance for which advertisements may be presented to a vehicle user;
means for verifying the value and content of said at least one advertisement; and
means for presenting said at least one advertisement to said vehicle user.

8. The architecture for context-aware advertisement and delivery among mobile communication devices according to claim 7, further comprising means for decrypting said advertising data and authenticating the signature of said advertising data, wherein said signature includes identification of the source of said advertising data.

9. A method for context-aware advertisement and delivery among mobile communication devices over a communication network, the method stored and executed as an application for use by network devices, the method comprising:
providing map data for at least one vehicle on the network;
interpreting at least one member selected from the group consisting of localization data, map data, and device state data provided by sensors within said vehicle;
receiving advertising data;
entering at least one advertisement into memory;
determining presentation slot availability, wherein said presentation slot consists of a particular circumstance for which advertisements may be presented to a vehicle user;
verifying the value and content of said at least one advertisement; and
presenting said at least one advertisement to said vehicle user.

10. A computer-readable storage medium having computer readable program code embodied in said medium which, when said program code is executed by a computer causes said computer to perform method steps for context-aware advertisement and delivery among mobile communication devices over a communication network, said method comprising:
providing map data for at least one vehicle on the network;
interpreting at least one member selected from the group consisting of localization data, map data, and device state data provided by sensors within said vehicle;
receiving advertising data;
entering at least one advertisement into memory;
determining presentation slot availability, wherein said presentation slot consists of a particular circumstance for which advertisements may be presented to a vehicle user;
verifying the value and content of said at least one advertisement; and
presenting said at least one advertisement to said vehicle user.
